# EUROPÄISCHE PATENTSCHRIFT

(11) **EP 2 984 530 B1**
(45) Veröffentlichungstag und Bekanntmachung des Hinweises auf die Patenterteilung: **12.09.2018**
(21) Anmeldenummer: 14706518.9
(22) Anmeldetag: 17.02.2014
(51) Int. Cl.: G05B 19/042

(54) **MESSUMFORMERSPEISEGERÄT MIT ABSCHALTBARER FUNKSCHNITTSTELLE**
MEASURING TRANSDUCER FEED UNIT, SYSTEM FOR USE IN AUTOMATION TECHNOLOGY, AND METHOD FOR OPERATING SUCH A SYSTEM
APPAREIL D'ALIMENTATION D'UN TRANSDUCTEUR DE MESURE, SYSTÈME DESTINÉ À ÊTRE UTILISÉ DANS LES TECHNIQUES D'AUTOMATISATION, ET PROCÉDÉ D'UTILISATION DUDIT SYSTÈME

(30) Priorität: 08.04.2013 DE 102013103454
(43) Veröffentlichungstag der Anmeldung: 17.02.2016
(73) Patentinhaber: Endress+Hauser Wetzer GmbH+Co. KG, 87484 Nesselwang (DE)
(72) Erfinder: ZENUNI, Armend, 79539 Lörrach (DE); SPRINGMANN, Thorsten, 79688 Hausen (DE); SCHÄUBLE, Harald, 79539 Lörrach (DE)
(74) Vertreter: Andres, Angelika Maria
(86) Internationale Anmeldenummer: PCT/EP2014/052992
(87) Internationale Veröffentlichungsnummer: WO 2014/166656

(56) Entgegenhaltungen:
- WO-A2-2008/127580
- DE-A1-102006 009 979
- DE-A1-102007 054 923
- DE-A1-102010 063 226
- DE-A1-102011 076 708

## Beschreibung

Die Erfindung betrifft ein Messumformerspeisegerät, ein System zum Einsatz in der Automatisierungstechnik sowie ein Verfahren zum Bedienen des Systems.

In der Prozessautomatisierungstechnik werden vielfach Feldgeräte eingesetzt, die zur Erfassung und/oder Beeinflussung von Prozessvariablen dienen. Beispiele für derartige Feldgeräte sind Füllstandsmessgeräte, Massendurchflussmessgeräte, Druck- und Temperaturmessgeräte, pH-Redoxpotential- Messgeräte, Leitfähigkeitsmessgeräte etc., die als Sensoren die entsprechenden Prozessvariablen Füllstand, Durchfluss, Druck, Temperatur, pH-Wert bzw. Leitfähigkeitswert erfassen.

Zur Beeinflussung von Prozessvariablen dienen so genannte Aktoren, z. B. Ventile, die den Durchfluss einer Flüssigkeit in einem Rohrleitungsabschnitt steuern oder Pumpen, die den Füllstand in einem Behälter ändern.

Eine Vielzahl solcher Feldgeräte wird von der Firma Endress + Hauser® hergestellt und vertrieben.

Häufig sind Feldgeräte mit übergeordneten Einheiten z. B. Leitsystemen oder Steuereinheiten verbunden. Diese übergeordneten Einheiten dienen zur Prozesssteuerung, Prozessvisualisierung, Prozessüberwachung.

Die Energie- und/oder Signalübertragung zwischen Feldgeräten und übergeordneten Einheiten erfolgt häufig nach dem bekannten 4 bis 20 mA Standard, bei dem eine 4 bis 20 mA Stromschleife bzw. eine Zweidrahtleitung zwischen dem Feldgerät und der übergeordneten Einheit ausgebildet ist.

Auf diesem 4 bis 20 mA Standard baut das HART-Protokoll auf. Mit Hilfe des HART-Protokolls und der somit ermöglichten bidirektionalen Kommunikation, lassen sich die eingangs beschriebene Feldgeräte sehr flexibel parametrieren, in Betrieb nehmen oder auch Datensätze auslesen, die auf dem Feldgerät gespeichert sind. Das HART-Protokoll ermöglicht somit eine sehr einfache Bedienung des Feldgerätes mittels einer Bedieneinheit.

Hierzu wird auf das 4 bis 20 mA Signal bzw. die 4 bis 20 mA Stromschleife die zu übertragenden Daten aufmoduliert, um so digital zwischen Feldgerät und der Bedieneinheit zu kommunizieren, während gleichzeitig die analoge Signalübertragung stattfindet.

Handelt es sich bei den Feldgeräten bspw. um Sensoren, so werden die von dem Sensor erfassten Messwerte als analoges Stromsignal über die Zweidrahtleitung an die übergeordnete Einheit übertragen. Der Messbereich der Sensoren wird dabei linear auf das 4 bis 20 mA Stromsignal abgebildet. Gleichzeitig steht über die digitale HART Kommunikation eine wechselseitige Kommunikation zur Verfügung, um bspw. eine Parametrierung des Feldgerätes mittels der Bedieneinheit durchzuführen. Neben dem HART-Protokoll gibt es weitere Protokolle wie bspw. Foundation Fieldbus, und/oder Profibus PA die ähnliche Funktionen wie HART ermöglichen.

Die Energieversorgung der Feldgeräte erfolgt ebenfalls über das 4 bis 20 mA Stromsignal, so dass neben der Zweidrahtleitung keine zusätzliche Versorgungsleitung notwendig ist. Normalerweise wird die Energieversorgung nicht durch die übergeordnete Einheit, sondern durch ein Messumformerspeisegerät realisiert, welches mit der 4 bis 20 mA Stromschleife bzw. der Zweidrahtleitung verbunden und typischerweise von der übergeordneten Einheit abgesetzt angeordnet ist.

Für den Einsatz von Feldgeräten im Ex-Bereich sind gewisse Maßnahmen im Hinblick auf die Eigensicherheit notwendig. So ist eine galvanische Trennung bei der Übertragung der Signale zwischen der übergeordneten Einheit, die im sicheren Bereich angeordnet ist, und dem Feldgerät, das im eigensicheren Bereich angeordnet ist nötig.

Aus dem Stand der Technik sind Bedieneinheiten bekannt, die zur Kommunikation mit dem Feldgerät physikalisch an die 4 bis 20 mA Stromschleife angeschlossen werden, um so die Bedienung des Feldgerätes über die 4 bis 20 mA Stromschleife mittels des HART-Protokolls zu ermöglichen. Derartige Bedieneinheiten weisen den Nachteil auf, dass sie, wie bereits erwähnt, physikalisch an die 4 bis 20 mA Stromschleife angeschlossen bzw. angeklemmt werden müssen. Hierzu muss die Zweidrahtleitung derartig modifiziert bspw. abisoliert und/oder durchtrennt werden, dass die Bedieneinheit angeschlossen werden kann. Dies führt dazu, dass das eigentliche analoge Stromsignal, welches die Messwerte des Feldgerätes überträgt, für den Zeitraum des Anschlusses der Bedieneinheit nicht übertragen wird. In anderen Worten wird die analoge Übertragung der Messwerte unterbrochen.

Ebenfalls ist aus dem Stand der Technik bekannt, Funkmodule zur leichteren Bedienung von Feldgeräten zu verwenden. Es sind Lösungen bekannt, bei denen die Feldgeräte integrierte Funkmodule aufweisen. Es ist aber auch bekannt geworden, Feldgeräte mit Funkmodulen nachzurüsten, so dass die Feldgeräte dann drahtlos durch Bedieneinheiten, die ebenfalls ein Funkmodul aufweisen, bedient werden können.

Derartige Lösungen weisen den Nachteil auf, dass das Funkmodul zusätzlich zu dem Feldgerät an sich, mit Energie versorgt werden muss. Die Energieversorgung der Feldgeräte als auch des Funkmoduls erfolgt dabei, wie eingangs erwähnt, über die 4 bis 20 mA Stromschleife. Die Speisung der 4 bis 20 mA Stromschleife mit elektrischer Energie erfolgt dabei bspw. über ein eingangs beschriebenes Messumformerspeisegerät. Dieses liefert die zum Einstellen eines Stromwertes in der Stromschleife erforderliche elektrische Spannung. Oftmals reicht die der Stromschleife zuführbare Energie nicht aus, um das Feldgerät mit der zum Betrieb des integrierten Funkmoduls benötigten Energie über die Signalleitung zu versorgen.

Abhilfe wird diesem Nachteil geleistet, in dem, wie in der DE 10 2004 020 393 A vorgeschlagen, eine separate Energieversorgung für das Funkmodul in Form einer Batterie vorgesehen ist.

Diese Lösung weist wiederum den Nachteil auf, dass die Wartung, insbesondere die Kontrolle des Batteriezustandes, einen erheblichen Aufwand für den Bediener eines solchen Feldgerätes darstellt.

Darüber hinaus weisen derartige Lösungen den Nachteil auf, dass die Feldgeräte, die mit Funkmodulen ausgerüstet sind nicht immer kontrollierbar sind, so dass ungewolltes Bedienen oder auch eine bewusste Manipulationen ausgeschlossen oder verhindert werden kann. So kann es bspw. vorkommen, dass ein Bediener der sich in Reichweite des Funkmodules zur drahtlosen Kommunikation befindet, versehentlich mit einem Feldgerät verbindet und so ein ungewolltes Bedienen dieses Feldgerätes herbeiführt. Neben diesem ungewollten Bedienen kann es aber zu bewussten Handlungen in Form von Manipulationen an Feldgeräten, die mit solchen Funkmodulen ausgestattet sind, kommen. Speziell in großen Automatisierungsanlagen, in denen die Feldgeräte über einen weiten Bereich verteilt sind, ist eine effektive Kontrolle der Feldgeräte äußerst schwierig und es kann nicht ausgeschlossen werden, dass eine Manipulation, bspw. in Form eines Hackerangriffes, eines Feldgerätes stattfindet.

Ferner sind aus dem Stand der Technik die WO 2008/127580 A2, die DE 10 2006 009979 A1, die DE 10 2010 063226 A1, die DE 10 2007 054923 A1 sowie die DE 10 2011 076708 A1 bekannt geworden.

Die WO 2008/127580 A2 offenbart hierbei einen drahtlosen Prozesskommunikationsadapter, die DE 10 2006 009979 A1 eine Einrichtung zur drahtlosen Kommunikation mit einem Feldgerät, die DE 10 2010 063226 A1 ein Feldgerät mit einer drahtlosen Kommunikationsschnittstelle, die DE 10 2007 054923 A1 ein Verfahren zum Betreiben eines Feldgerätes der industriellen Prozess- und/oder Automatisierungstechnik und die DE 10 2011 076708 A1 eine Funkeinheit für eine Anlage der Prozessautomatisierungstechnik mit einer Versorgungsschaltung.

Der Erfindung liegt die Aufgabe zugrunde, ein erhöhte Bedienerfreundlichkeit für ein Feldgerät, welches in der Automatisierungstechnik eingesetzt wird, zu ermöglichen.

Die Aufgabe wird durch ein Messumformerspeisegerät, ein System zum Einsatz in der Automatisierungstechnik sowie ein Verfahren zum Bedienen des Systems gelöst.

Hinsichtlich des Messumformerspeisegerätes wird die Aufgabe erfindungsgemäß durch ein Messumformerspeisegerät zum Einsatz in einem Schaltschrank gelöst, welches über eine erste Zweidrahtleitung mit einem Feldgerät und über eine zweite Zweidrahtleitung mit einer übergeordneten Einheit verbunden ist, wobei das Messumformerspeisegerät zumindest einen Schalter, ein Funkmodul und eine Schaltung umfasst, wobei das Funkmodul mittels des Schalters aktivierbar oder deaktivierbar ist und die Schaltung die Umsetzung zwischen Signalen der ersten Zweidrahtleitung und Signalen des Funkmodules realisiert, so dass das eine über die erste Zweidrahtleitung an das Messumformerspeisegerät angeschlossene Feldgerät mittels des Funkmoduls des Messumformerspeisegerätes durch eine drahtlose Kommunikationsverbindung bedienbar ist, wenn das Funkmodul des Messumformerspeisegerätes durch den Schalter aktivierbar ist.

Erfindungsgemäß wird in ein Messumformerspeisegerät, welches über eine Zweidrahtleitung die Anbindung zumindest eines Feldgerätes an eine übergeordnete Einheit ermöglicht, ein Funkmodul integriert. Über einen Schalter ist das Funkmodul aktivierbar bzw. deaktivierbar, so dass eine Bedieneinheit drahtlos mit Hilfe des Messumformerspeisegerätes mit dem Feldgerät kommunizieren kann. Die Kommunikation zwischen dem mindestens einen Feldgerät und der Bedieneinheit erfolgt hierbei vorzugsweise über das eingangs beschriebene HART-Protokoll. Denkbar ist aber auch Foundation Fieldbus und/oder Profibus PA.

Durch die Integration des Funkmodules in das Messumformerspeisegerät ergibt sich eine Reihe von Vorteilen.

So ist, durch die Integration eines Funkmodules in ein Messumformerspeisegerät zur Bedienung eines Feldgerätes, das Anklemmen und Abklemmen der Bedieneinheit an die Zweidrahtleitung hinfällig. Damit einhergehend ist eine kontinuierliche Kommunikation zwischen dem Feldgerät und der übergeordneten Einheit auch während der Kommunikation zwischen der Bedieneinheit und dem Feldgerät gegeben.

Ein weiterer Vorteil besteht darin, dass das Funkmodul nicht mehr über die 4 bis 20 mA Zweidrahtleitung mit Energie versorgt werden muss, da es unmittelbar von dem Messumformerspeisegerät mit Energie versorgt wird. Hierdurch reduziert sich der Wartungsaufwand, da eine Kontrolle der ordnungsgemäßen Energieversorgung, bspw. des Batteriezustandes, des Funkmodules nicht mehr nötig ist.

Darüber hinaus ist durch den Schalter, der das Funkmodul ein- bzw. auszuschalten, der Zugriff auf das Feldgerät einfacher zu kontrollieren. Zum einen bedarf es somit einer bewussten Aktivierung des Funkmodules eines spezifischen Feldgerätes durch den Bediener und zum anderen ist das Funkmodul nicht durchgängig aktiviert und somit die Zeiträume in denen eine Manipulation stattfinden kann deutlich kleiner.

Ein weiterer Vorteil ergibt sich daraus, dass die Bedienung eines Feldgerätes, welches bspw. auf einem Tank sitzt und somit nicht ohne weiteres zugänglich ist erleichtert wird, da die Bedienung des Feldgerätes über das Messumformerspeisegerät ermöglicht wird, welches typischerweise in gut zugänglichen Bereichen der Automatisierungsanlage angeordnet ist.

Gemäß einer vorteilhaften Ausgestaltung ist in dem Messumformerspeisegerät eine galvanische Trennung zwischen dem Feldgerät und der übergeordneten Einheit realisiert.

Gemäß einer weiteren vorteilhaften Ausgestaltung ist das Funkmodul derartig ausgebildet, dass die drahtlose Kommunikationsverbindung vorzugsweise mittels Bluetooth und/oder Nahfeldkommunikation möglich ist. Denkbar ist aber auch ein Funkmodul, welches eine drahtlose Kommunikationsverbindung bspw. gemäß ANT, WirelessHART, ZigBee, nanoNET ermöglicht.

Hinsichtlich des Systems wird die Aufgabe erfindungsgemäß durch ein System zum Einsatz in der Automatisierungstechnik gelöst, welches zumindest folgendes aufweist:
- einen Schaltschrank,
- ein Messumformerspeisegerät nach zumindest einer der vorhergehenden Ausgestaltungen, wobei das Messumformerspeisegerät in dem Schaltschrank befestigt ist,
- eine übergeordnete Einheit die über das Messumformerspeisegerät mittels der ersten Zweidrahtleitung an das Feldgerät angebunden ist,
- ein mobiles Endgerät, welches eine zu dem Funkmodul korrespondierende Einheit für die drahtlose Kommunikationsverbindung aufweist.

Als mobiles Endgerät kommt bspw. ein Smartphone, Mobiltelefon, Laptop, Tablet-PC, PDA, Netbook, UMPC, etc. in Betracht.

Gemäß einer vorteilhaften Ausgestaltung ist das Messumformerspeisegerät mittels einer Hutschiene im Schaltschrank befestigt.

Gemäß einer weiteren vorteilhaften Ausgestaltung läuft auf dem mobilen Endgerät eine Bediensoftware ab, die die Bedienung des Feldgerätes ermöglicht.

Hinsichtlich des Verfahrens wird die Aufgabe durch ein Verfahren zum Bedienen eines Systems wie es in einer der vorhergehenden Ausgestaltungen beschrieben ist, gelöst, wobei das Verfahren folgende Schritte aufweist:
- Betätigung des Schalters des Messumformerspeisegerätes, so dass das Funkmodul aktiviert wird,
- Aufbauen einer drahtlosen Kommunikationsverbindung zwischen dem Funkmodul des Messumformerspeisegerätes und der dazu korrespondierenden Einheit des mobilen Endgerätes,
- Bedienen des an das Messumformerspeisegeräts angebundenen Feldgerätes durch die drahtlose Kommunikationsverbindung zwischen dem Messumformerspeisegerätes und dem mobilen Endgerät,
- Betätigung des Schalters des Messumformerspeisegerätes, so dass das Funkmodul deaktiviert wird.

Die Erfindung wird anhand der nachfolgenden Zeichnungen näher erläutert. Es zeigt:

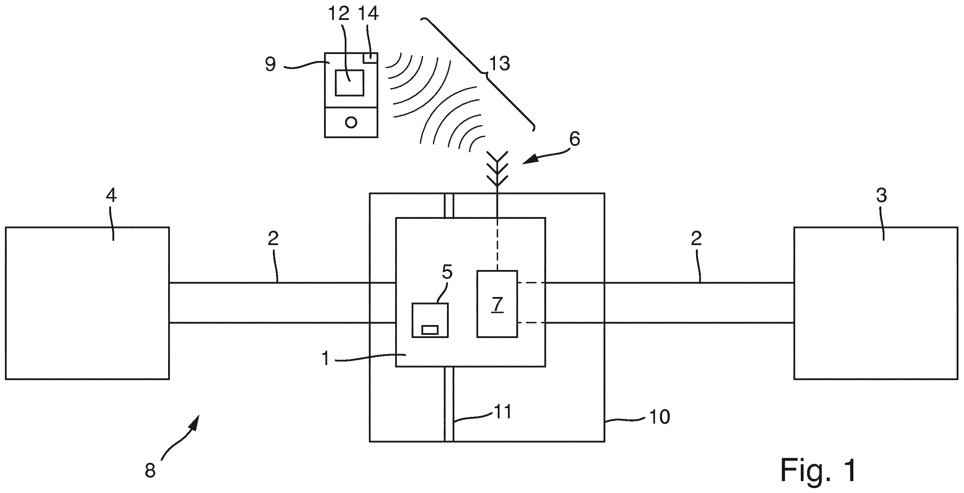

Fig. 1: ein System zum Einsatz in der Automatisierungstechnik, welches ein erfindungsgemäßes Messumformerspeisegerät umfasst.

Figur 1 zeigt ein System 8 zum Einsatz in der Automatisierungstechnik, welches ein Messumformerspeisegerät 1, ein Feldgerät 3 sowie eine übergeordnete Einheit 4 umfasst. Das Feldgerät 3 ist dabei über eine Zweidrahtleitung 2 mit der übergeordneten Einheit 4 verbunden, um so Messwerte und/oder Stellwerte im Falle eines Aktors zwischen dem Feldgerät 3 und der übergeordneten Einheit 4 zu übermitteln bzw. transferieren.

Die übergeordnete Einheit 4 kann z. B. ein Leitsystem oder eine Steuereinheit darstellen, die zur Prozesssteuerung, Prozessvisualisierung, Prozessüberwachung dienen. Die übergeordnete Einheit 4 ist dabei typischerweise abgesetzt von dem Feldgerät 3 in einer Leitwarte angeordnet. Von dieser übergeordneten Einheit 4 geht die Zweidrahtleitung 2 über das Messumformerspeisegerät 1, welches an einer Hutschiene 11 im Schaltschrank 10 befestigt ist, an das Feldgerät 3. Derartige Messumformerspeisegeräte 1 sind dabei in Automatisierungsanlagen oftmals in dem Schaltschrank 10 zentral zusammen gefasst.

Das erfindungsgemäße Messumformerspeisegerät 1 umfasst dabei einen Schalter 5, mittels dem ein integriertes Funkmodul 6 aktivierbar oder deaktivierbar ist, sowie eine Schaltung 7, die die Umsetzung zwischen Signalen der Zweidrahtleitung 2 gemäß dem HART-Protokoll und den Signalen des Funkmodules 6 realisiert. Auf diese Weise ist das Feldgerät 3, welches an das Messumformerspeisegerät 1 angeschlossene ist, mittels des Funkmoduls 6 durch eine drahtlose Kommunikationsverbindung 13 bedienbar.

Mit Hilfe des in das Messumformerspeisegerät 1 integrierten Funkmoduls 6 kann über ein mobiles Endgerät 9, welches eine zu dem Funkmodul 6 korrespondierende Einheit 14 für die drahtlose Kommunikationsverbindung 13 aufweist, das an das Messumformerspeisegerät 1 angeschlossene Feldgerät 3 bedient werden.

Das Funkmodul 6 sowie die dazu korrespondierende Einheit 14 des mobilen Endgerätes 9 sind dabei derartig ausgestaltet, dass eine drahtlose Kommunikationsverbindung 13 mittels Bluetooth und/oder Nahfeldkommunikation möglich ist. Denkbar ist aber auch eine Ausgestaltung, bei der eine drahtlose Kommunikationsverbindung 13 bspw. gemäß ANT, WirelessHART, ZigBee und/oder nanoNET möglich ist.

Auf dem mobilen Endgerät 9 läuft eine Bediensoftware 12 ab, die die Bedienung des Feldgerätes 3 ermöglicht.

Auf diese Weise kann bei Durchführung der folgenden Verfahrensschritte das Feldgerät 3 mittels des mobilen Endgerätes 9, bspw. durch einen Servicetechniker sicher bedient werden.

Im ersten Schritt muss der Schalter 5 des Messumformerspeisegerätes 1 derartig betätigt werden, dass das Funkmodul 6 aktiviert wird.

Im zweiten Schritt wird dann der Aufbau der drahtlosen Kommunikationsverbindung 13 zwischen dem Funkmodul 6 des Messumformerspeisegerätes 1 und der dazu korrespondierenden Einheit 14 des mobilen Endgerätes 9 mittels der Bediensoftware 12 realisiert.

Im dritten Schritt wird das Feldgerät 3, dass an das Messumformerspeisegerät 1 angebunden ist und durch die drahtlose Kommunikationsverbindung 13 zwischen dem mobilen Endgerät 9 und dem Funkmodul 6 des Messumformerspeisegerätes 1 bedienbar ist, bedient.

Im letzten Schritt wird nach abgeschlossener Bedienung des Feldgerätes 3 der Schalter 5 des Messumformerspeisegerätes 1 erneut betätigt, so dass das Funkmodul 6 deaktiviert wird.

### Bezugszeichenliste

- 1: Messumformerspeisegerät
- 2: Zweidrahtleitung
- 3: Feldgerät
- 4: Übergeordnete Einheit
- 5: Schalter
- 6: Funkmodul
- 7: Schaltung
- 8: System
- 9: Mobiles Endgerät
- 10: Schaltschrank
- 11: Hutschiene
- 12: Bediensoftware
- 13: Drahtlose Kommunikationsverbindung
- 14: Einheit des mobilen Endgerätes, welche zum Funkmodul korrespondiert

## Patentansprüche

1. Messumformerspeisegerät (1) der Automatisierungstechnik zum Einsatz in einem Schaltschrank, welches über eine erste Zweidrahtleitung (2) mit einem Feldgerät (3) und über eine zweite Zweidrahtleitung mit einer übergeordneten Einheit (4) verbunden ist, wobei das Messumformerspeisegerät (1) zumindest einen Schalter (5), ein Funkmodul (6) und eine Schaltung (7) umfasst, wobei das Funkmodul (6) mittels des Schalters (5) aktivierbar oder deaktivierbar ist und die Schaltung (7) die Umsetzung zwischen Signalen der ersten Zweidrahtleitung (2) und Signalen des Funkmodules (6) realisiert, so dass das eine über die erste Zweidrahtleitung (2) an das Messumformerspeisegerät (1) angeschlossene Feldgerät (3) mittels des Funkmoduls (6) des Messumformerspeisegerätes (1) durch eine drahtlose Kommunikationsverbindung (13) bedienbar ist, wenn das Funkmodul (6) des Messumformerspeisegerätes (1) durch den Schalter (7) aktiviert ist.

2. Messumformerspeisegerät nach Anspruch 1, wobei in dem Messumformerspeisegerät (1) eine galvanische Trennung zwischen dem Feldgerät (3) und der übergeordneten Einheit (4) realisiert ist.

3. Messumformerspeisegerät nach Anspruch 1 oder 2, wobei das Funkmodul (6) derartig ausgebildet ist, dass die drahtlose Kommunikationsverbindung (13) mittels Bluetooth und/oder Nahfeldkommunikation ermöglicht.

4. System zum Einsatz in der Automatisierungstechnik, welches zumindest folgendes aufweist:
- einen Schaltschrank (10),
- ein Messumformerspeisegerät (1) nach zumindest einem der vorhergehenden Ansprüche 1-3, wobei das Messumformerspeisegerät (1) in dem Schaltschrank befestigt ist,
- eine übergeordnete Einheit (4) die über das Messumformerspeisegerät (1) mittels der ersten Zweidrahtleitung (2) an das Feldgerät (3) angebunden ist,
- ein mobiles Endgerät (9), welches eine zu dem Funkmodul (6) korrespondierende Einheit (14) für die drahtlose Kommunikationsverbindung (13) aufweist.

5. System nach Anspruch 4, wobei das Messumformerspeisegerät (1) mittels einer Hutschiene (11) im Schaltschrank (10) befestigt ist.

6. System nach einem der Ansprüche 4 oder 5, wobei auf dem mobilen Endgerät (9) eine Bediensoftware (12) abläuft, die die Bedienung des Feldgerätes (3) ermöglicht.

7. Verfahren zum Bedienen eines Systems (8) nach zumindest einem der Ansprüche 4-6, wobei das Verfahren folgende Schritte aufweist:
- Betätigung des Schalters (5) des Messumformerspeisegerätes (1), so dass das Funkmodul (6) aktiviert wird,
- Aufbauen einer drahtlosen Kommunikationsverbindung (13) zwischen dem Funkmodul (6) des Messumformerspeisegerätes (1) und der dazu korrespondierenden Einheit (14) des mobilen Endgerätes (9),
- Bedienen des an das Messumformerspeisegeräts (1) angebundenen Feldgerätes (3) durch die drahtlose Kommunikationsverbindung (13) zwischen dem Messumformerspeisegerätes (1) und dem mobilen Endgerät (9),
- Betätigung des Schalters (5) des Messumformerspeisegerätes (1), so dass das Funkmodul (6) deaktiviert wird.

## Claims

1. Transmitter power unit (1) used in automation engineering designed for deployment in a control cabinet, said unit being connected to a field device (3) via a first two-wire cable (2) and to a higher-level unit (4) via a second two-wire cable, wherein the transmitter power unit (1) has at least a switch (5), a radio module (6) and a circuit (7), wherein the radio module (6) can be activated or deactivated by means of a switch (5) and the circuit (7) implements the conversion between signals of the first two-wire cable (2) and signals of the radio module (6), such that the field device (3) which is connected to the transmitter power unit (1) via the first two-wire cable (2) can be operated via a wireless communication connection (13) by means of the radio module (6) of the transmitter power unit (1) when the radio module (6) of the transmitter power unit (1) is activated by the switch (7).

2. Transmitter power unit as claimed in Claim 1, wherein galvanic isolation is implemented in the transmitter power unit (1) between the field device (3) and the higher-level unit (4).

3. Transmitter power unit as claimed in Claim 1 or 2, wherein the radio module (6) is designed in such a way that the wireless communication connection (13) is enabled by means of Bluetooth and/or near field communication.

4. System for use in automation engineering, said system comprising at least the following elements:
- a control cabinet (10),
- a transmitter power unit (1) as claimed in at least one of the previous Claims 1 to 3, wherein the transmitter power supply unit (1) is secured in the control cabinet,
- a higher-order unit (4), which is connected to the field device (3) via the transmitter power unit (1) by means of the first two-wire cable (2),
- a mobile terminal (9), which has a unit (14) for the wireless communication connection (13), said unit corresponding to the radio module (6).

5. System as claimed in Claim 4, wherein the transmitter power unit (1) is secured in the control cabinet (10) by means of a DIN rail (11).

6. System as claimed in one of the Claims 4 or 5, wherein operating software (12), which makes it possible to operate the field device (3), runs on the mobile terminal (9).

7. Procedure for operating a system (8) as claimed in at least one of the Claims 4 to 6, said procedure comprising the following steps:
- Actuation of the switch (5) of the transmitter power unit (1) in such a way that the radio module (6) is activated,
- Establishment of a wireless communication connection (13) between the radio module (6) of the transmitter power unit (1) and the unit (14) of the mobile terminal (9) that corresponds to it,
- Operation of the field device (3) connected to the transmitter power unit (1) via the wireless communication connection (13) between the transmitter power unit (1) and the mobile terminal (9),
- Actuation of the switch (5) of the transmitter power unit (1) such that the radio module (6) is deactivated.

## Revendications

1. Unité d'alimentation de transmetteur (1) de la technique d'automatisation, destiné à une utilisation dans une armoire électrique, laquelle unité est reliée via un premier câble bifilaire (2) avec un appareil de terrain (3) et via un deuxième câble bifilaire avec une unité maîtresse (4), l'unité d'alimentation de transmetteur (1) comportant au minimum un interrupteur (5), un module radio (6) et un circuit (7), le module radio (6) pouvant être activé ou désactivé au moyen de l'interrupteur (5) et le circuit (7) réalisant la conversion entre les signaux du premier câble bifilaire (2) et les signaux du module radio (6), si bien qu'un appareil de terrain (3) raccordé via le premier câble bifilaire (2) à l'unité d'alimentation de transmetteur (1) peut être utilisé au moyen du module radio (6) de l'unité d'alimentation de transmetteur (1) par une liaison de communication sans fil (13), lorsque le module radio (6) de l'unité d'alimentation de transmetteur (1) est activé par l'interrupteur (7).

2. Unité d'alimentation de transmetteur selon la revendication 1, pour laquelle est réalisée, dans l'unité d'alimentation de transmetteur, une séparation galvanique entre l'appareil de terrain (3) et l'unité maîtresse (4).

3. Unité d'alimentation de transmetteur selon la revendication 1 ou 2, pour laquelle le module radio (6) est conçu de telle sorte que la liaison de communication sans fil (13) permet une communication Bluetooth et/ou une communication de champ proche.

4. Système destiné à une utilisation dans la technique d'automatisation, lequel présente au minimum les éléments suivants :
- une armoire électrique (10),
- une unité d'alimentation de transmetteur (1) selon au moins l'une des revendications 1 à 3 précédentes, l'unité d'alimentation de transmetteur (1) étant fixée dans l'armoire électrique,
- une unité maîtresse (4), laquelle est reliée à l'appareil de terrain (3) via l'unité d'alimentation de transmetteur (1) au moyen du premier câble bifilaire (2),
- un terminal mobile (9), lequel comporte une unité (14) correspondant au module radio (6) pour la liaison de communication sans fil (13).

5. Système selon la revendication 4, pour lequel l'unité d'alimentation de transmetteur (1) est fixée au moyen d'un profilé chapeau (11) dans l'armoire électrique (10).

6. Système selon l'une des revendications 4 ou 5, pour lequel est exécuté sur le terminal mobile (9) un logiciel d'exploitation (12), qui permet la commande de l'appareil de terrain (3).

7. Procédé destiné à l'utilisation d'un système (8) selon au moins l'une des revendications 4 à 6, lequel procédé comprend les étapes suivantes :
- Actionnement de l'interrupteur (5) de l'unité d'alimentation de transmetteur (1) de telle sorte à activer le module radio (6),
- Établissement d'une liaison de communication sans fil (13) entre le module radio (6) de l'unité d'alimentation de transmetteur (1) et de l'unité correspondante (14) du terminal mobile (9),
- Commande de l'appareil de terrain (3) relié à l'unité d'alimentation de transmetteur (1) par la liaison de communication sans fil (13) entre l'unité d'alimentation de transmetteur (1) et le terminal mobile (9),
- Actionnement de l'interrupteur (5) de l'unité d'alimentation de transmetteur (1) de telle sorte à désactiver le module radio (6).
